# EUROPEAN PATENT APPLICATION

(11) **EP 1 468 875 A1**
(43) Date of publication of application: **20.10.2004**
(21) Application number: 02793150.0
(22) Date of filing: 20.12.2002
(51) Int. Cl.: B60R 16/02, E05F 15/16, H01H 25/04

(54) **COMMUNICATION CIRCUIT AND A CONTROL SWITCH FOR VEHICLE WINDOW-OPENING MECHANISMS**

(30) Priority: 31.12.2001 ES 200103163 U
(71) Applicant: Lear Automotive (EEDS) Spain, S.L., 43800 Valls, (Tarragona) (ES)
(72) Inventor: TORRENTS GAVALDA, Eduard, E-43800 Valls (Tarragona) (ES); SANCHEZ, Emilio, E-43800 Valls (Tarragona) (ES)
(74) Representative: Primo de Rivera y Urquijo, Jose Antonio
(86) International application number: PCT/ES2002/000613
(87) International publication number: WO 2003/055722

(57) **Abstract**

The invention relates to a communication circuit which is used to connect, via a data bus, window-opening and - closing switches to the control circuits for the respective motors thereof and to the central vehicle controller. Said system can be used to control the sun roof and the passenger window from the driver's seat. The aforementioned switches can be: rotated, in order manually to adjust the degree that the window is opened; and moved, in order to activate the automatic and full opening or closing of the window.

## Description

The following invention, a communication circuit and a control switch for vehicle window-opening mechanisms, is made up of a new electric window opening operation mechanism which permits the easy regulation of the window panel, while at the same time, continuing operating as a traditional window opening operation.

Therefore, this invention is of special interests to the automovile industry, in particular that directed to the manufacturing of auxiliary equipment such as cars window opening equipment.

The state of the art as far as window-opening devices is concerned, is classified in manual and automatic types, which basically consist of mechanisms to raise or lower the window panel: the first mentioned type is purely mechanical and the latter one are operated by means of an electrical motor.

As of late, automatic systems have surpassed manual systems because of the greater comfort they provide. Nevertheless, these automatic systems still show some lack of precision when the motor associated to the window opening mechanism is operated by means of a simple switch, so that up or down displacement of the panel takes place at the same speed, remaining constant during the entire operation, determined by the technical features of the electrical and mechanical elements part of the window opening device.

Furthermore, the speed selected during the dimensioning or design of these devices, must be sufficiently high and similar to the speed during manual operation so that the user does not get an uneasy feeling of slowness during the operation of the device. This is not an inconvenience if the user operates the window to fully close or open it. Nevertheless, when one wants to open a little or modify the height of the window panel using the electronic and automatic devices becomes very difficult because when the switch commanding the motor is activated, it causes the window panel to move at great speed.

On the other hand, another inconvenience of the mentioned automatic operation mechanisms is that they may be the cause of an accident if a finger or hand gets caught between the panel and the frame without the possibility that the mechanism detects an anomaly to stop the motor.

This invention includes a window-opening device that uses innovative elements for these applications. In concrete, it is based on reducing the rotation speed of the electrical motor by defining two operation modes: manual and automatic.

Because of these reasons, this advanced window-opening device for automobiles, described next, is composed by an electromechanical set that includes an activation switch and electronic switching circuitry that can operate on an electrical motor mechanically associated to the vehicle's window-opening mechanism. In this device, the aforementioned switch is unique and multi-position and it has at least two operation modes: manual and automatic, corresponding to low and high speed, using the previously referred electronic switching circuitry, including a "Door Switch Node" or switching board equipped with a communications bus or multi-signal channel with the vehicle's electronic system and connected by means of a different bus to the "Smart Power Windows Motor" or to the operation and control board of the window-opening electrical motor. The previously referred circuits are connected to the vehicle's chassis for safety reasons to prevent shorts.

In addition, this device permits through the communication means by bus to the vehicle's electronic system the operation of the window panels from the opposite door. On the other hand, the device can also incorporate a stop anti-catch feature by means of the aforementioned operation and control of the electric motor board.

Also, this device can be used not only for the vehicle's door windows but also for sunroofs. Lastly, the device's switch can be shaped as a "joy stick" or a lever switch to rotate when in manual mode and move forward and backward when in automatic mode.

Next, a detailed description of the advanced automobile window-opening operation device is provided, displayed as the object of this invention, with reference to the accompanying figure, which shows, a not exclusive sample, a preferred embodiment. This sample can be adapted to all detail variations that do not presuppose a fundamental alteration of the essential characteristics of these advances.

The mentioned plan shows:

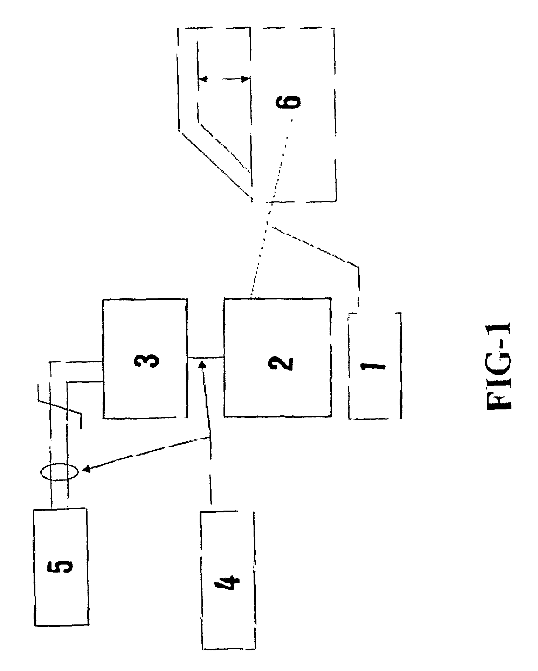

Figure 1: A view of the functional blocks of the advanced automobile window-opening operation device.

The preferred embodiment shows that the advances in the updates automobile window-opening operation device are constituted by the creation of an electronic set comprising an activation switch with electronic switching circuitry. In this device, the aforementioned switch is unique and multi-position and it has at least two operation modes: manual and automatic, corresponding to low and high speed, using the previously referred electronic switching circuitry, including a "door Switch Node" (3) or switching board equipped with a communications bus (4) or multi-signal channel with the vehicle's electronic system and connected by means of a different bus to the "Smart Power Windows Motor" (2) or to the operation and control board of the window-opening electrical motor (1). The previously referred circuits are connected to the vehicle's chassis (5) for safety reasons to prevent shorts

In addition, this device permits through the communication means by bus to the vehicle's electronic system, the operation of the window panels from the opposite door. On the other hand, the device can also incorporate a stop anti-catch feature by means of the aforementioned operation and control of the electric motor (1) board (2).

Also, this device can be used not only for the vehicle's door windows but also for sunroofs. Lastly, the device's switch can be shaped as a "joy stick" or a lever switch to rotate when in manual mode and move forward and backward when in automatic mode.

Finally, the shape, materials and dimensions and in general, all accessories and secondary elements that do not alter, change or modify the essential described advances can be modified.

## Claims

1. An advanced automobile window-opening operation device consisting of an electromechanical set that includes an activation switch and electronic switching circuitry that can operate on an electrical motor mechanically associated to the vehicle's window-opening mechanism (6), characterized because the mentioned switch operates on the window opening mechanism (6) by means of the aforementioned electronic switching circuitry, which includes a switching board (3) ("Door Switch Node"), provided with communication through a multi-signal channel (4) or bus to the electronic system of the vehicle and connected through another multi-signal channel or bus to the activation and control board (2) ("Smart Power Windows Motor") of the electric motor (1) of the window-opening device (6), being these circuits connected to the vehicle's chassis (5).

2. Device, according to claim 1, characterized because the switch is unique and multi-position and has two operation modes, one manual for low displacement speeds (6)and another one automatic for high speed of displacement of the window opening device.

3. Device, according to claim 1, characterized because the described device permits the operation of the panels of one door from the opposite door by means of the mentioned communication means, through multi-signal channel or bus, with the vehicle's electronic system.

4. Device, according to any of the preceding claims, characterized because it includes a stop anti-catch feature controlled by means of the window opening device's (6) electric motor (1) operation and control board (2).

5. Device, according to any of the preceding claims, characterized because it operates on sunroofs in addition to the vehicle's door windows.

6. Decive, according to any of the preceding claims, characterized because the mentioned switch is shaped like a lever switch or joy stick to rotate in manual mode and to move forward and backward when in automatic mode.
